# EUROPÄISCHE PATENTSCHRIFT

(11) **EP 1 195 537 B1**
(45) Veröffentlichungstag und Bekanntmachung des Hinweises auf die Patenterteilung: **12.03.2003**
(21) Anmeldenummer: 00121731.4
(22) Anmeldetag: 05.10.2000
(51) Int. Cl.: F16D 25/10

(54) **Doppelkupplung für ein Getriebe mit zwei Getriebeeingangswellen**
Transmission double clutch with two input shafts
Double embrayage pour une transmission avec deux arbres d'entrée

(43) Veröffentlichungstag der Anmeldung: 10.04.2002
(73) Patentinhaber: Ford Global Technologies, Inc., A subsidiary of Ford Motor Company, Dearborn, Michigan 48126 (US)
(72) Erfinder: Hegerath, Andreas, 50126 Bergheim (DE)
(74) Vertreter: Messulam, Alec Moses

(56) Entgegenhaltungen:
- EP-A- 0 314 636
- EP-A- 1 052 421
- DE-A- 4 239 233
- DE-U- 9 114 528
- US-A- 3 424 033

## Beschreibung

Die Erfindung bezieht sich auf eine hydraulische Doppelkupplung für ein Getriebe mit zwei Getriebeeingangswellen, vorzugsweise für ein Lastschaltgetriebe in Kraftfahrzeugen, mit einer konzentrischen Anordnung der beiden Getriebeeingangswellen, einem angetriebenen Kupplungsgehäuse, zwei hydraulisch betätigten Kupplungen mit Reibscheiben und ringförmigen Kolben-Zylindereinheiten, wobei die erste Kupplung das Kupplungsgehäuse mit der ersten Getriebeeingangswelle und die zweite Kupplung das Kupplungsgehäuse mit der zweiten Getriebeeingangswelle schaltbar verbindet.

Aus der DE 3819702 ist eine Doppelkupplung des gattungsbildenden Oberbegriffes bekannt. Das Kupplungsgehäuse ist aus einer linken Deckplatte und Seitenplatte, einer rechten Deckplatte und Seitenplatte sowie einem sie verbindenden Mantelteil zusammengesetzt. An den Trennebenen zwischen der linken Deckplatte und Seitenplatte sowie der rechten Deckplatte und Seitenplatte sind Ringkolben eingepaßt, die mit Hydraulikdruck beaufschlagbar sind und über stirnseitig an ihnen anliegenden Zylinderstifte die beiden Lamellenpakete betätigen. Aus der axialen Anordnung von Ringkolben und Lamellenpaketen resultiert eine sehr große axiale Baulänge der gesamten Doppelkupplung.

Eine weitere gattungsgemäße Doppelkupplung ist aus der DE 19833376 bekannt. Sie ist dadurch gekennzeichnet, daß die Ringkolben auf Ihren den ersten radialen Wirkflächen abgewandten Seiten zwischen sich einen Hohlraum einschließen, daß die Ringkolben auf ihren dem Hohlraum zugewandten Seiten mit zweiten radialen Wirkflächen versehen sind, wobei diese zweiten radialen Wirkflächen gleich groß sind, und daß der Hohlraum mit einem Fluid gefüllt ist. Damit erfüllt die Kupplung die erfindungsgemäße Aufgabe, den störenden Einfluß der vom rotierenden Hydrauliköl ausgeübten Fliehkraft zu vermeiden. Allerdings ist der Antrieb der zweiten Kupplung mechanisch sehr aufwendig, da ein kompliziertes Hebelgestänge für die Kraftübertragung vom Ringkolben auf das Lamellenpaket erforderlich ist.

Aufgabe der Erfindung ist es deshalb, eine Doppelkupplung in kompakter Bauweise mit hoher Drehmomentkapazität zu schaffen. Weiterhin soll die Möglichkeit bestehen, auf einfache Weise einen völligen Ausgleich der fliehkraftabhängigen Drücke in den Arbeitskammern der Kolben-Zylindereinheiten zu erzielen

Die Aufgabe wird dadurch gelöst, indem die beiden Kupplungen nebeneinander angeordnet sind, getrennt durch einen fest mit dem Kupplungsgehäuse verbunden Kupplungssteg, und die für die Betätigung der Kupplung vorgesehenen zwei Kolben-Zylindereinheiten ebenfalls nebeneinander und getrennt durch den Kupplungssteg, zwischen Kupplungen und Getriebeeingangswellen auf einem geringeren Durchmesser als die Kupplungen angeordnet sind.

Durch diese Anordnung wird die kompakte Bauweise bei hoher Drehmomentkapazität erreicht. Die äußeren Abmessungen der Doppelkupplung werden im wesentlichen von den Reibscheiben bestimmt. Der Außendurchmesser vom Außendurchmesser der Reibscheiben plus den Reibscheibenträgem, die Baulänge von der doppelten Dicke des Reibscheibenpaketes plus der Druckplatten. Für die Kolben-Zylindereinheit ist zwischen Innendurchmesser der Reibscheiben und Getriebeeingangswellen ausreichend Bauraum vorhanden, um eine sichere Funktion der Kupplung zu gewährleisten.

Eine derartige Doppelkopplung weist die größtmögliche Drehmomentkapazität bei vorgegebenen Außenabmessungen auf bzw. ermöglicht bei geforderter Drehmomentkapazität die kompakteste Bauweise: Die Reibscheiben sind radial soweit wie möglich außen angeordnet, wodurch das maximale Drehmoment pro Reibscheibe, bezogen auf den Außendurchmesser der Doppelkupplung, erzielt wird; und die gesamte Baulänge wird mit den beiden Reibscheibenpaketen einschließlich der notwendigen Andruckplatten voll ausgefüllt, wodurch die maximale Anzahl an Reibscheiben bei vorgegebener Baulänge der Doppelkupplung untergebracht wird.

Vorteilhaft sind Kupplungssteg und Kupplungsgehäuse über eine Kupplungsnabe und einen Kupplungsdeckel des Kupplungsgehäuses verbunden, indem Kupplungsdeckel und Kupplungssteg fest auf der Kupplungsnabe angeordnet sind. Die Kupplungsnabe ist auf einer Kupplungsachse gelagert, die fest mit dem Getriebegehäuse verbunden ist und die mehrere Ölkanäle aufweist, über die die Kupplungsnabe mit Drucköl für die Betätigung der Kupplung versorgt wird. Die Kupplungsnabe hat somit drei Aufgaben: Drehbare Lagerung des gesamten Antriebsteils der Doppelkupplung gegenüber dem Getriebegehäuse, Kraftübertragung vom Kupplungsgehäuse zum Kupplungssteg, und die Ölversorgung der Kolben-Zylindereinheiten.

Vorteilhaft ist die erste Getriebeeingangswelle mit der ersten Kupplung über eine erste Kupplungsglocke verbunden, indem die erste Kupplungsglocke auf der ersten, hohlen Getriebeeingangswelle befestigt ist und am Innendurchmesser des äußeren Flansches die abtriebsseitigen Reibscheiben der ersten Kupplung aufnimmt. Weiterhin ist die zweite Getriebeeingangswelle mit der zweiten Kupplung über eine zweite Kupplungsglocke verbunden, indem die zweite Kupplungsglocke auf der zweiten, inneren Getriebeeingangswelle befestigt ist und am Innendurchmesser des äußeren Flansches die abtriebsseitigen Reibscheiben der zweiten Kupplung aufnimmt.

Diese Anordnung benötigt nur minimal zusätzlichen Bauraum, um Drehmoment vom motorseitigen Kupplungsgehäuse auf die beiden Getriebeeingangswellen des nachgeschalteten Getriebes zu übertragen.

Vorzugsweise ist der Kupplungssteg zwischen den beiden Kupplungen die antriebsseitige Druckplatte für beide Kupplungen. Damit wird eine Druckplatte gespart; deren Funktion wird von dem einen zentralen Kupplungssteg übernommen.

Die antriebseitigen Reibscheiben beider Kupplungen sind an ihrem Innendurchmesser drehfest mit an dem Kupplungssteg angeordneten Innenreibscheibenträger verbunden. Damit können Kupplungssteg und die beiden Innenreibscheibenträger aus einem Stück hergestellt sein, was Bauraum, Gewicht und Fertigungskosten spart.

Weiterhin sind vorteilhafterweise beide Kupplungen und beide Kolben-Zylindereinheiten gleich und beide spiegelbildlich zum Kupplungssteg angeordnet. Durch die Verwendung gleicher Kolben-Zylindereinheiten und gleicher Reibscheiben wird die Komplexität der Doppelkupplung gesenkt, was einen erheblichen Kostenvorteil erbringt.

Bei einer weiteren vorteilhaften Ausgestaltung der Erfindung weist eine Kolben-Zylindereinheit einen Ringkolben und einen Ringzylinder auf, die eine von Drucköl beaufschlagbare Arbeitskammer bilden, wobei der Ringkolben im Ringzylinder beweglich geführt und gedichtet ist, der Ringzylinder fest mit der Kupplungsnabe verbunden ist, der Ringkolben zwischen Kupplungssteg und Ringzylinder angeordnet ist und der Ringkolben über einen Andruckring auf die bewegliche, antriebsseitige Druckplatte der Reibscheiben wirkt.
Bei der Beaufschlagung der Arbeitskammer mit Drucköl wird der Ringkolben in Richtung des Kupplungssteges verschoben. Dies gilt für beide Ringkolben, d. h. die beiden Ringkolben drücken in entgegengesetzte Richtungen. Durch die Anordnung der Kupplungsnabe auf der Kupplungsachse ist die Versorgung der Arbeitskammern mit Drucköl sehr einfach zu realisieren

Eine vorteilhafte Ausführung sieht vor, daß der Andruckring den Ringzylinder radial umschließt und mittels einer Umfangsdichtung radial gegen den Ringzylinder beweglich abgedichtet ist, und am Andruckring ein Ausgleichsdeckel auf der dem Ringkolben entgegengesetzten Seite des Ringzylinders angeordnet ist, wobei Ausgleichsdeckel, Andruckring und Ringzylinder eine Ausgleichskammer zum Ausgleich des Fliehkraftdruckes in der Arbeitskammer bilden.

Bei Drehung der Kupplungsnabe wird die Ausgleichskammer ständig mit Öl befüllt. Aufgrund der Fliehkräfte wird das Öl in der Ausgleichskammer gehalten, wobei die Ausgleichskammer bis zum inneren Durchmesser des Ausgleichsdeckels gefüllt wird. Überschüssiges Öl tritt dort aus und steht dem Schmierkreislauf wieder zur Verfügung. Die Ausgleichskammer ist, bezogen auf den Ringzylinder, gegenüber der Arbeitskammer angeordnet. Baut sich bei hohen Drehzahlen der Kupplungsnabe ein Fliehkraftdruck im Öl auf, wirkt die daraus resultierende Kraft auf den Ausgleichsdeckel der Ausgleichskammer der Kraft auf den Ringkolben, die durch den Fliehkraftdruck des Öls in der Arbeitskammer entsteht, entgegen. Durch die günstige Anordnung der Ausgleichskammer gegenüber der Arbeitskammer wirken die beiden Kräfte direkt gegeneinander und heben sich so ohne weitere Maßnahmen auf. Durch die Anpassung von Außen- und Innendurchmesser des Ausgleichsdeckel, wodurch die wirksame Druckfläche der Ausgleichskammer bestimmt wird, können die auf den Ringkolben wirkenden Kräfte aus den Fliehkraftdrücken des Öls vollständig eliminiert werden. Dadurch kann auch die Rückholeinrichtung des Ringkolbens so klein wie möglich ausgeführt werden.

Eine weitere Ausführung sieht vor, daß der Andruckring den Ringzylinder radial umschließt, am Andruckring ein Ausgleichsdeckel auf der dem Ringkolben entgegengesetzten Seite des Ringzylinders angeordnet ist, wobei Ausgleichsdeckel, Andruckring und Ringkolben eine Ausgleichskammer zum Ausgleich des Fliehkraftdruckes in der Arbeitskammer bilden. Diese Anordnung unterscheidet sich von der vorher besprochenen Ausführung lediglich darin, daß auf eine zusätzliche radiale Dichtung verzichtet wird und die Ausgleichskammer dadurch direkt an die Arbeitskammer, getrennt durch einen Dichtring, grenzt.

Vorteilhaft erfolgt die Befüllung der Ausgleichskammer mit Drucköl aus der Arbeitskammer über eine oder mehrere Füllbohrungen mit geringem Durchmesser. Damit ist auf einfache Weise die Ölversorgung der Ausgleichskammer sichergestellt, daß sobald Öl in der Arbeitskammer ist, auch Öl in der Ausgleichskammer ist.

Eine weitere Ausführung der Ölzufuhr sieht vor, daß die Befüllung der Ausgleichskammer mit Drucköl über eine separate Zuführung, unabhängig vom Arbeitskammerdruck, erfolgt. Damit läßt sich die Verlustmenge an Öl sehr gering halten, da nur ein sehr geringer Öldruck und eine geringe Ölmenge zur Versorgung der Ausgleichskammer notwendig ist.

Weitere vorteilhafte Ausgestaltungen der Erfindung sind den folgenden Zeichnungen zu entnehmen. Es zeigen:
- Fig. 1: eine erfindungsgemäße Doppelkupplung; und
- Fig.2: eine weitere Anordnung der Kolben-Zylindereinheit.

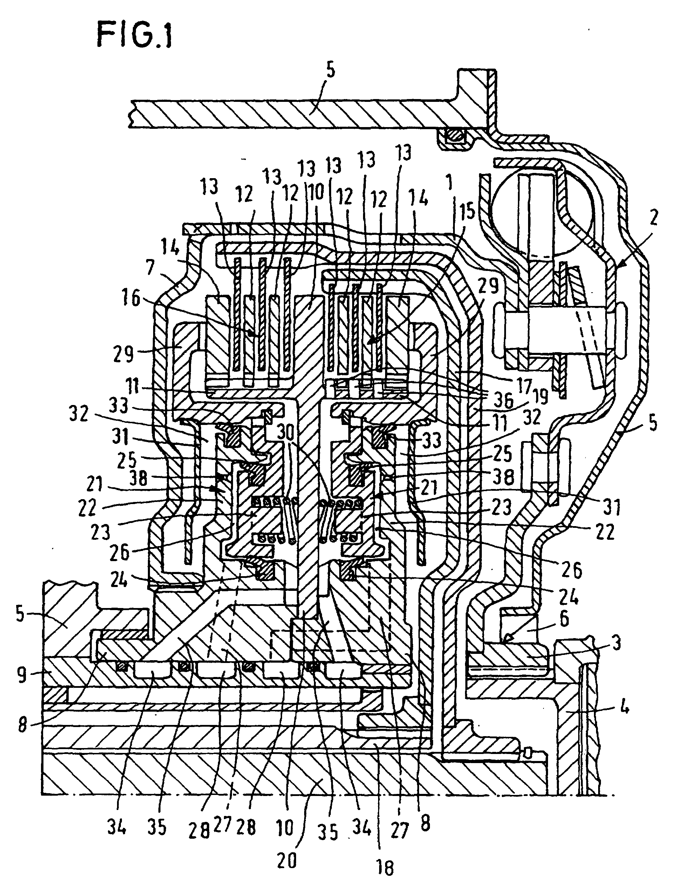

Die in Figur 1 gezeigte Doppelkupplung weist das Kupplungsgehäuse 1 auf, das über die Torsionsdämpfereinheit 2 am Kupplungsflansch 3 drehfest mit der Antriebswelle 4 eines nicht dargestellten Motors verbunden ist. Zwischen Kupplungsflansch 4 und Getriebegehäuse 5 ist ein Wellendichtring 6 angeordnet. Auf der motorabgewandten Seite weist die Doppelkupplung einen Kupplungsgehäusedeckel 7 auf, der das Kupplungsgehäuse 1 mit der Kupplungsnabe 8 drehfest verbindet, wobei die Kupplungsnabe 8 aus Montagegründen zweitgeteilt ist.

Die Kupplungsnabe 8 ist drehbar auf der mit dem Getriebegehäuse fest verbundenen Kupplungsachse 9 angeordnet. Aufgabe der Kupplungsachse 9 ist neben der Drehlagerung der Kupplungsnabe 8 und damit der gesamten Doppelkupplung weiterhin die Ölversorgung der Doppelkupplung, die über die feste Verbindung der Kupplungsachse 9 zum Getriebegehäuse 5 erfolgt.

Zwischen den zwei Teilen der Kupplungsnabe 8 ist der fest mit der Kupplungsnabe 8 verbundene Kupplungssteg 10 angeordnet. Dieser weist die beiden Innenreibscheibenträger 11 auf, die sich beidseitige des Kupplungssteges 10 in axialer Richtung erstrecken. Auf den Innenreibscheibenträgern 11 sind die antriebseitigen Reibscheiben 12 drehfest und axial verschiebbar angeordnet. Die antriebseitigen Reibscheiben 12 greifen in die abtriebsseitigen Reibscheiben 13 ein. Jeweils am axialen Ende jedes Reibscheibenpaketes sind die antriebsseitigen Druckplatten 14 angeordnet, über die ein axialer Kupplungsdruck auf das erste Reibscheibenpaket 15 oder das zweite Reibscheibenpaket 16 aufgebracht wird, wodurch die Kupplung schließt. Als Gegendruckplatte wirkt für beide Reibscheibenpakete der Kupplungssteg 10, wodurch nur eine Gegendruckplatte benötigt wird.

Die abtriebsseitigen Reibscheiben 13 des ersten Reibscheibenpaketes 15 sind drehfest und axial verschiebbar mit der ersten Kupplungsglocke 17 und diese wiederum drehfest mit der ersten Getriebeeingangswelle 18 verbunden. Wird das erste Reibscheibenpaket 15 mit dem Kupplungsdruck über die Druckplatte 14 beaufschlagt, stellt das Reibscheibenpaket 15 eine drehfeste Verbindung zwischen Innenreibscheibenträger 11 und erster Kupplungsglocke 17 her, wodurch das Antriebsdrehmoment aus der Antriebswelle 4 auf die erste Getriebeeingangswelle 18 geleitet wird.

In gleicher Weise wirkt das zweite Reibscheibenpaket 16: Die abtriebsseitigen Reibscheiben 13 des zweiten Reibscheibenpaketes 16 sind drehfest und axial verschiebbar mit der zweiten Kupplungsglocke 19 und diese wiederum drehfest mit der zweiten Getriebeeingangswelle 20 verbunden. Wird das zweite Reibscheibenpaket 16 mit dem Kupplungsdruck über die Druckplatte 14 beaufschlagt, stellt das Reibscheibenpaket 16 eine drehfeste Verbindung zwischen Innenreibscheibenträger 11 und zweiter Kupplungsglocke 19 her, wodurch das Antriebsdrehmoment aus der Antriebswelle 4 auf die zweite Getriebeeingangswelle 20 geleitet wird.

Der Kupplungsdruck auf die beiden Druckplatten 14 wird über zwei Kolben-Zylindereinheiten 21 aufgebracht, die zwischen den Innenreibscheibenträgern 11 und der Kupplungsnabe 8 angeordnet sind. Beide Kolbenzylindereinheiten 21 sind identisch und weisen vorzugsweise die gleichen Bauteile auf, es werden deshalb in den Zeichnungen auch gleiche Bezugszeichen für gleiche Teile verwendet. Die Kolben-Zylindereinheiten 21 sind spiegelsymmetrisch zum Kupplungssteg 10 angeordnet, um jeweils den Kupplungsdruck in Richtung auf den Kupplungssteg 10 aufbringen zu können.

Jede Kolbenzylindereinheit weist einen Ringzylinder 22 auf, der fest mit der Kupplungsnabe 8 verbunden ist. Am Ringzylinder 22 ist ein Ringkolben 23 angeordnet. Mittels der Ringdichtungen 24 und 25 wird zwischen Ringzylinder 22 und Ringkolben 23 die Arbeitskammer 26 gebildet. Die Arbeitskammer 26 ist über die Ölbohrung 27 in der Kupplungsnabe 8 mit den Ölkanal 28 in der Kupplungsachse 9 verbunden. Über eine nicht dargestellte Steuerung erfährt das Öl im Ölkanal 9 einen Steuerdruck, der sich über die Ölbohrung 27 auf die Arbeitskammer 26 fortsetzt. Aufgrund des anliegenden Steuerdrucks in der Arbeitskammer 26 fährt der Ringkolben 23 aus und erzeugt den Kupplungsdruck. Über den mit dem Ringkolben 23 fest verbundenen Andruckring 29 wird der Kupplungsdruck auf die Druckplatte 14 übertragen; die Kupplung schließt.

Wird der Steuerdruck zurückgenommen, baut sich der Kupplungsdruck ab, die Kupplung öffnet und der Ringkolben 23 fährt zurück in seine Ruhposition, wobei die Druckfeder 30 das Zurückfahren unterstützt. Da in der Arbeitskammer 26 ständig eine Restmenge Öl verbleibt, wirkt in der Arbeitskammer 26 ständig ein zusätzlicher, drehzahlabhängiger Fliehkraftdruck. Diese Fliehkraftdruck erzeugt eine Kraft auf den Ringkolben 23, der die Druckfeder 30 ständig entgegenwirken muß, da ansonsten der Ringkolben 23 aus seiner Ruheposition fahren und die Druckplatten 14 damit die Reibscheibenpakete 15, 16 einen geringen Kupplungdruck erfahren würden, der zu einer, wenn ein Ringkolben 23 eigentlich in der Ruheposition sein sollte, nicht gewünschten Drehmomentübertragung der jeweiligen Kupplung führte. Da in der Regel bei hohen Drehzahlen nur eine Kupplung geschlossen ist, würde durch diesen Fliehkraftdruck die zweite Kupplung unnötig in Eingriff gebracht, was zu Drehmomentverlusten und unnötigem Verschleiß führen würde.

Dieser Fliehkraftdruck in der Arbeitskammer wird erfindungsgemäß ausgeglichen, indem zwischen Ringzylinder 22 und einem Ausgleichsdeckel 31, der am Andruckring 29 befestigt ist, eine Ausgleichskammer 32 gebildet wird, wobei diese über die Ringdichtung 33 zwischen Andruckring 29 und Ringzylinder 22 gedichtet ist. Radial innen ist die Ausgleichskammer 32 offen, d. h bei Stillstand der Kupplung fließt zumindest ein Teil des darin befindlichen Öles aus der Ausgleichskammer 32. Nur bei Drehung der Kupplung hält sich das Öl aufgrund der Fliehkräfte in der Ausgleichskammer 32.

Die Befüllung der Ausgleichskammer 32 erfolgt über eine kleine Füllbohrung 38 im Ringzylinder 22, welche Arbeitskammer 26 und Ausgleichskammer 32 verbindet. Somit ist sichergestellt, daß sobald die Arbeitskammer 26 mit Öl befüllt ist, auch die Ausgleichskammer 32 mit Öl gefüllt wird. Durch die Anpassung von Außen- und Innenradius des Ausgleichsdeckels 31 wird die wirksame Druckfläche der Ausgleichskammer 32 und damit die fliehkraftabhängige Gegenkraft festgelegt, die der Kraft aus dem Fliehkraftdruck im Ringkolben 23 entgegenwirkt. Diese Anordnung erlaubt jede beliebige Abstimmung der fliehkraftabhängigen Kräfte zwischen Arbeitskammer 26 und Ausgleichskammer 32, wobei neben den konstruktiven Besonderheiten wie der Höhe der Flüssigkeitssäule in den Ölbohrungen 27, die den Fliehkraftdruck beeinflußt, auch bestimmte drehzahlabhängige Charakteristiken bei der Rückfahrt des Ringkolbens 23 in die Ruheposition berücksichtigt werden können. Wesentlicher Vorteil ist, daß die Druckfeder 30 nur so stark dimensioniert werden muß, das sie den Ringkolben im Stillstand in Ruheposition fahren kann. Dadurch entfällt der bei größerer Federkraft der Druckfeder 30 notwendige hohe Steuerdruck für die Arbeitskammer 26, wodurch insgesamt der Ölbedarf der Kupplung sinkt.

Zur Ölversorgung der Reibscheiben 12, 13 weist die Kupplungsachse 9 weitere Ölkanäle 34 auf, die über Ölbohrungen 35 Öl in den Bereich radial innerhalb der Innenreibscheibenträger 11 leiten. Dieses Öl wird über im Innenreibscheibenträger 11 eingebrachten Schmieröffnungen 36 auf die Reibscheiben 12, 13 geleitet und kühlt und schmiert diese somit.

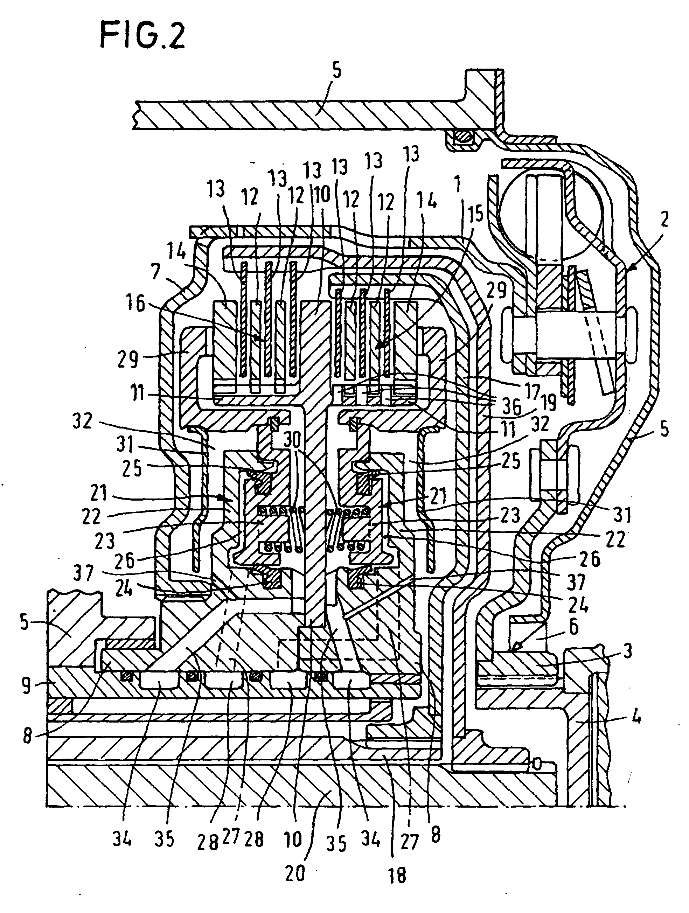

Eine weitere Ausführungsform der Kolben-Zylindereinheit ist in Figur 2 dargestellt. Wesentlicher Unterschied zu der in Figur 1 gezeigten Ausführung besteht in der Anordnung der Ausgleichkammerbefüllung und deren Abdichtung.

Die Befüllung der Ausgleichskammern 32 erfolgt über die Ölversorgung der Reibscheibenpakete 15, 16 aus den Ölkanälen 34, indem zusätzliche Füllbohrungen 37 mit den Ölbohrungen 35 verbunden sind. Über diese Füllbohrungen 37 gelangt Schmieröl mit geringem Druck in die Ausgleichskammem 32. Zwischen Ausgleichskammer 32 und Arbeitskammer 26 besteht hier keine direkte Verbindung. Wesentlicher Vorteil ist, das der Steuerdruck in der Arbeitskammer besser auf den benötigten Kupplungsdruck des Ringkolbens 23 abgestimmt werden kann, da jetzt weniger Steueröl verloren geht.

Weiter sieht die Ausführung keine Ringdichtung zwischen Andruckring 29 und Ringzylinder 22 vor. Jetzt erstreckt sich die Ausgleichskammer 32 zwar bis zur Ringdichtung 33 der Arbeitskammer 26, wieder kann jedoch durch Anpassung des Innendurchmessers des Ausgleichsdeckels 31 der Fliehkraftdruckausgleich wie gewünscht eingestellt werden.

Die vorliegende Erfindung offenbart damit eine Doppelkupplung, die bei kompakter Bauweise eine hohe Drehmomentkapazität aufweist und die einen völligen Ausgleich des Fliehkraftdrucks in der Kupplungsbetätigung zuläßt. Es versteht sich von selbst, daß die Anwendungen der Erfindung nicht auf die dargestellten Beispiele reduziert sind, insbesondere können auch Teillösungen dieser Doppelkupplung in anderen Ausführungen Eingang finden.

## Patentansprüche

1. Hydraulische Doppelkupplung für ein Getriebe mit zwei Getriebeeingangswellen (18, 20), vorzugsweise für ein Lastschaltgetriebe in Kraftfahrzeugen, mit einer konzentrischen Anordnung der beiden Getriebeeingangswellen (18, 20), einem angetriebenen Kupplungsgehäuse (1), zwei hydraulisch betätigten Kupplungen mit Reibscheiben (12, 13) und ringförmigen Kolben-Zylindereinheiten (21), wobei die erste Kupplung das Kupplungsgehäuse (1) mit der ersten Getriebeeingangswelle (18) und die zweite Kupplung das Kupplungsgehäuse (1) mit der zweiten Getriebeeingangswelle (20) schaltbar verbindet,
**dadurch gekennzeichnet, daß**
die beiden Kupplungen nebeneinander angeordnet sind, getrennt durch einen fest mit dem Kupplungsgehäuse (1) verbunden Kupplungssteg (10), und die für die Betätigung der Kupplung vorgesehenen zwei Kolben-Zylindereinheiten (21) ebenfalls nebeneinander und getrennt durch den Kupplungssteg (10), zwischen Reibscheiben (12, 13) und Getriebeeingangswellen (18, 20) auf einem geringeren Durchmesser als die Reibscheiben (12, 13) angeordnet sind.

2. Hydraulische Doppelkupplung nach Anspruch 1,
**dadurch gekennzeichnet, daß**
Kupplungssteg (10) und Kupplungsgehäuse (1) über eine Kupplungsnabe (8) und einen Kupplungsdeckel (7) des Kupplungsgehäuses (1) verbunden sind, indem Kupplungsdeckel (7) und Kupplungssteg (10) fest auf der Kupplungsnabe (8) angeordnet sind.

3. Hydraulische Doppelkupplung nach Anspruch 1 oder 2,
**dadurch gekennzeichnet, daß**
die erste Getriebeeingangswelle (18) mit der ersten Kupplung über eine erste Kupplungsglocke (17) verbunden ist, indem die erste Kupplungsglocke auf der ersten, hohlen Getriebeeingangswelle (18) befestigt ist und am Innendurchmesser des äußeren Flansches die abtriebsseitigen Reibscheiben (13) der ersten Kupplung aufnimmt, die zweite Getriebeeingangswelle (20) mit der zweiten Kupplung über eine zweite Kupplungsglocke (19) verbunden ist, indem die zweite Kupplungsglocke (19) auf der zweiten, inneren Getriebeeingangswelle (20) befestigt ist und am Innendurchmesser des äußeren Flansches die abtriebsseitigen Reibscheiben (13) der zweiten Kupplung aufnimmt.

4. Hydraulische Doppelkupplung nach Anspruch 1,
**dadurch gekennzeichnet, daß**
der Kupplungssteg (10) zwischen den beiden Kupplungen die antriebsseitige Druckplatte für beide Kupplungen ist.

5. Hydraulische Doppelkupplung nach Anspruch 1,
**dadurch gekennzeichnet, daß**
die antriebseitigen Reibscheiben (12) beider Kupplungen an ihrem Innendurchmesser drehfest mit den am Kupplungssteg (10) angeordneten Innenreibscheibenträgern (11) verbunden sind.

6. Hydraulische Doppelkupplung nach Anspruch 1,
**dadurch gekennzeichnet, daß**
beide Kupplungen gleich sind, beide Kolben-Zylindereinheiten (21) gleich sind und Kupplungen und Kolben-Zylindereinheiten (21) jeweils spiegelbildlich zum Kupplungssteg (10) angeordnet sind.

7. Hydraulische Doppelkupplung nach Anspruch 1,
**dadurch gekennzeichnet, daß**
eine Kolben-Zylindereinheit (21) einen Ringkolben (23) und einen Ringzylinder (22) aufweist, die eine von Drucköl beaufschlagbare Arbeitskammer (26) bilden, wobei der Ringkolben (23) im Ringzylinder (22) beweglich geführt und gedichtet ist, der Ringzylinder (22) fest mit der Kupplungsnabe (8) verbunden ist, der Ringkolben (23) zwischen Kupplungssteg (10) und Ringzylinder (22) angeordnet ist und der Ringkolben (23) über einen Andruckring (29) auf die bewegliche, antriebsseitige Andruckplatte (14) der Reibscheiben (12, 13) wirkt.

8. Hydraulische Doppelkupplung nach Anspruch 7,
**dadurch gekennzeichnet, daß**
der Andruckring (29) den Ringzylinder (22) radial umschließt und mittels einer Umfangsdichtung (33) radial gegen den Ringzylinder (22) beweglich abgedichtet ist, und am Andruckring (29) ein Ausgleichsdeckel (31) auf der dem Ringkolben (23) entgegengesetzten Seite des Ringzylinders (22) angeordnet ist, wobei Ausgleichsdeckel (31), Andruckring (29) und Ringzylinder (22) eine Ausgleichskammer (32) zum Ausgleich des Fliehkraftdruckes in der Arbeitskammer (26) bilden.

9. Hydraulische Doppelkupplung nach Anspruch 7,
**dadurch gekennzeichnet, daß**
der Andruckring (29) den Ringzylinder (22) radial umschließt, am Andruckring (29) ein Ausgleichsdeckel (31) auf der dem Ringkolben (23) entgegengesetzten Seite des Ringzylinders (22) angeordnet ist, wobei Ausgleichsdeckel (31), Andruckring (29) und Ringkolben (23) eine Ausgleichskammer (32) zum Ausgleich des Fliehkraftdruckes in der Arbeitskammer (26) bilden.

10. Hydraulische Doppelkupplung nach Anspruch 8 oder 9,
**dadurch gekennzeichnet, daß**
die Befüllung der Ausgleichskammer (32) mit Drucköl aus der Arbeitskammer (26) über eine oder mehrere Füllbohrungen (38) mit geringem Durchmesser erfolgt.

11. Hydraulische Doppelkupplung nach Anspruch 8 oder 9,
**dadurch gekennzeichnet, daß**
die Befüllung der Ausgleichskammer (32) mit Drucköl über eine separate Füllbohrung (37), unabhängig vom Arbeitskammerdruck, erfolgt.

## Claims

1. Hydraulic double clutch for a transmission with two input shafts (18, 20), preferably for a load shift transmission in motor vehicles, with a concentric arrangement of the two input shafts (18, 20), driven clutch housing (1), two hydraulically activated clutches with friction discs (12, 13) and annular piston-cylinder units (21), wherein the first clutch connects the clutch housing (1) in a shifting way with the first input shaft (18) and the second clutch connects the clutch housing (1) in a shifting way with the second input shaft (20),
**characterised in that**
the two clutches are arranged beside each other, separated by a clutch web (10) securely connected with the clutch housing (1), and the two piston-cylinder units (21) provided for the activation of the clutch are likewise arranged beside each other and separated by the clutch web (10), between friction discs (12, 13) and input shafts (18, 20) on a smaller diameter than the friction discs (12, 13).

2. Hydraulic double clutch according to Claim 1
**characterised in that**
the clutch web (10) and the clutch housing (1) are connected via a clutch hub (8) and a clutch cover (7) of the clutch housing (1) **in that** the clutch cover (7) and clutch web (10) are securely arranged on the clutch hub (8) .

3. Hydraulic double clutch according to Claim 1 or 2
**characterised in that**
the first input shaft (18) is connected with the first clutch via a first clutch cap (17) **in that** the first clutch cap is secured on the first, hollow input shaft (18) and on the inner diameter of the outer flange takes up the output-side friction discs (13) of the first clutch, the second input shaft (20) is connected with the second clutch via a second clutch cap (19) **in that** the second clutch cap (19) is secured on the second, inner input shaft (20) and on the inner diameter of the outer flange takes up the output-side friction discs (13) of the second clutch.

4. Hydraulic double clutch according to Claim 1
**characterised in that**
the clutch web (10) between the two clutches is the drive-side pressure plate for both clutches.

5. Hydraulic double clutch according to Claim 1
**characterised in that**
the drive-side friction discs (12) of both clutches on their inner diameter are connected in a rotationally secure way with the inner friction disc carriers (11) arranged on the clutch web (10).

6. Hydraulic double clutch according to Claim 1
**characterised in that**
both clutches are the same, both piston-cylinder units are the same and the clutches and piston-cylinder units (21) are respectively arranged in a mirror image to the clutch web (10).

7. Hydraulic double clutch according to Claim 1
**characterised in that**
a piston-cylinder unit (21) has an annular piston (23) and a ring cylinder (22), which form a work chamber (26) that can be impacted by pressure oil, wherein the annular piston (23) is guided in a movable way in the ring cylinder (22) and is sealed, the ring cylinder (22) is securely connected with the clutch hub (8), the annular piston (23) is arranged between the clutch web (10) and the ring cylinder (22) and the annular piston (23) acts on the movable, drive-side pressure plate (14) of the friction discs (12, 13) via a pressure plate (14).

8. Hydraulic double clutch according to Claim 7
**characterised in that**
the pressure ring (29) radially surrounds the ring cylinder (22) and by means of a circumferential seal (33) is sealed in a movable way radially against the ring cylinder (22), and on the pressure ring (29) a compensating cover (31) is arranged on the side of the ring cylinder (22) set against the annular piston (23), wherein the compensating cover (31), pressure ring (29) and ring cylinder (22) form a compensating chamber (32) for compensating the centrifugal force pressure in the work chamber (26).

9. Hydraulic double clutch according to Claim 7
**characterised in that**
the pressure ring (29) radially surrounds the ring cylinder (22), on the pressure ring (29) a compensating cover (31) is arranged on the side of the ring cylinder (22) set against the annular piston (23), wherein the compensating cover (31), the pressure ring (29) and the annular piston (23) form a compensating chamber (32) for compensating the centrifugal force pressure in the work chamber (26).

10. Hydraulic double clutch according to Claim 8 or 9
**characterised in that**
the filling of the compensating chamber (32) with pressure oil from the work chamber (26) takes place via one or more filling holes (38) with a small diameter.

11. Hydraulic double clutch according to Claim 8. or 9
**characterised in that**
the filling of the compensating chamber (32) with pressure oil takes place via a separate filling hole (37), independently from the work chamber pressure.

## Revendications

1. Double embrayage hydraulique pour boîte de vitesses à deux arbres d'entrée (18, 20), de préférence pour transmission automatique de véhicules à moteur, comprenant deux arbres d'entrée (18, 20) disposés de façon concentrique, un carter d'embrayage mené (1), deux embrayages hydrauliques à disques (12, 13) et des unités de piston et cylindre annulaires (21), le premier embrayage rendant le premier arbre d'entrée (18) solidaire du carter d'embrayage (1) et le second embrayage rendant le second arbre d'entrée (20) solidaire du carter d'embrayage (1), **caractérisé en ce que** les deux embrayages sont disposés côte à côte, séparés par une aile d'accouplement (10) reliée fixement au carter d'embrayage (1) et **en ce que** les deux unités de piston et cylindre (21) prévues pour actionner l'embrayage sont également disposées côte à côte en étant séparées par l'aile d'accouplement (10) entre les disques (12, 13) et les arbres d'entrée (18, 20), sur un plus petit diamètre que les disques (12, 13).

2. Double embrayage hydraulique selon la revendication 1, **caractérisé en ce que** l'aile d'accouplement (10) et le carter (1) de l'embrayage sont reliés entre eux par l'intermédiaire d'un moyeu (8) et d'un plateau de fermeture (7) du carter d'embrayage (1), dans la mesure où le couvercle d'embrayage (7) et l'aile d'accouplement (10) de l'embrayage sont placés fixement sur le moyeu (8).

3. Double embrayage hydraulique selon la revendication 1 ou 2, **caractérisé en ce que** le premier arbre d'entrée (18) est relié au premier embrayage par le biais d'une première cloche d'embrayage (17), dans la mesure où la première cloche d'embrayage est fixée sur le premier arbre d'entrée creux (18) et porte sur le diamètre intérieur de l'aile extérieure les disques (13) situés côté sortie du premier embrayage, **en ce que** le second arbre d'entrée (20) est relié au second embrayage par l'intermédiaire d'une seconde cloche d'embrayage (19), dans la mesure où la seconde cloche d'embrayage (19) est fixée sur le second arbre d'entrée intérieur (20) et porte sur le diamètre intérieur de l'aile extérieure les disques (13) du second embrayage situés côté mené.

4. Double embrayage hydraulique selon la revendication 1, **caractérisé en ce que** l'aile d'accouplement (10) entre les deux embrayages constitue le plateau de pression côté menant pour les deux embrayages.

5. Double embrayage hydraulique selon la revendication 1, **caractérisé en ce que** les disques (12) des deux embrayages qui sont situés côté menant sont reliés, au niveau de leur diamètre intérieur, de façon solidaire en rotation avec les supports des disques intérieurs (11) qui sont disposés sur l'aile d'accouplement (10).

6. Double embrayage hydraulique selon la revendication 1, **caractérisé en ce que** les deux embrayages sont identiques, **en ce que** les deux unités de piston et cylindre (21) sont identiques et **en ce que** les embrayages et les unités de piston et cylindre sont chaque fois disposés symétriquement par rapport à l'aile d'accouplement (10).

7. Double embrayage hydraulique selon la revendication 1, **caractérisé en ce qu'**une unité de piston et cylindre (21) présente un piston annulaire (23) et un cylindre annulaire (22) qui forment une chambre (26) pouvant être remplie d'huile hydraulique, sachant que le piston annulaire (23) est étanché et guidé de façon mobile dans le cylindre annulaire (22), **en ce que** le cylindre annulaire (22) est relié fixement au moyeu (8), **en ce que** le piston annulaire (23) est placé entre l'aile d'accouplement (10) de l'embrayage et le cylindre annulaire (22) et **en ce que** le piston annulaire (23) agit par l'intermédiaire d'un anneau de poussée (29) sur le plateau de pression mobile (14) des disques (12, 13) qui est situé côté menant.

8. Double embrayage hydraulique selon la revendication 7, **caractérisé en ce que** l'anneau de poussée (29) entoure radialement le cylindre annulaire (22) et est étanché vis-à-vis du cylindre annulaire (22) au moyen d'un joint circulaire (33) de façon à être mobile radialement, et **en ce qu'**un diaphragme (31) est disposé sur l'anneau de poussée (29), sur le côté du cylindre annulaire (22) qui est opposé au piston annulaire (23), sachant que le diaphragme (31), l'anneau de poussée (29) et le cylindre annulaire (22) forment une chambre de compensation (32) pour compenser la pression centrifuge dans la chambre (26).

9. Double embrayage hydraulique selon la revendication 7, **caractérisé en ce que** l'anneau de poussée (29) entoure radialement le cylindre annulaire (22), **en ce qu'**un diaphragme (31) est disposé sur l'anneau de poussée (29), sur le côté du cylindre annulaire (22) qui est opposé au piston annulaire (23), sachant que le diaphragme (31), l'anneau de poussée (29) et le cylindre annulaire (22) forment une chambre de compensation (32) pour compenser la pression centrifuge dans la chambre (26).

10. Double embrayage hydraulique selon la revendication 8 ou 9, **caractérisé en ce que** la chambre de compensation (32) est remplie d'huile hydraulique émanant de la chambre (26) par le biais d'un ou de plusieurs perçages d'alimentation (38) de faible diamètre.

11. Double embrayage hydraulique selon la revendication 8 ou 9, **caractérisé en ce que** la chambre de compensation (32) est remplie d'huile hydraulique au travers d'un perçage de remplissage séparé (37), indépendamment de la pression régnant dans la chambre.
